# DEMANDE DE BREVET EUROPEEN

(11) **EP 1 533 556 A1**
(43) Date de publication de la demande: **25.05.2005**
(21) Numéro de dépôt: 05075338.3
(22) Date de dépôt: 22.03.2000
(51) Int. Cl.: F16L 19/02, F16L 19/10

(54) **Procédé d'assemblage d'un conduit sur un embout tubulaire rigide au moyen d'un écrou visse sur l'embout, et raccord pour la mise en oeuvre du procédé**

(30) Priorité: 22.03.2000 FR 0003652
(62) Demande divisionnaire de: 01919533.8
(71) Demandeur: Benit, Claude, 77230 Dammartin en Goele (FR)
(72) Inventeur: Benit, Claude, 77230 Dammartin en Goele (FR)
(74) Mandataire: Doireau, Marc

(57) **Abrégé**

Procédé d'assemblage d'un conduit (1) sur un embout tubulaire rigide (3) au moyen d'un écrou (7) vissé sur l'embout (3), ce procédé consistant à rapporter une bague métallique (5) autour du conduit (1), et à utiliser l'opération de vissage de l'écrou (7) sur l'embout (3) pour provoquer une compression axiale de la bague (5) et assurer une solidarisation mécanique irréversible entre la bague (5) et le conduit (1), caractérisé en ce qu'il consiste à réaliser un usinage de la bague (5) pour favoriser le fluage de la matière vers l'intérieur de la bague, l'opération d'usinage de la bague (5) consistant à ménager des zones d'épaisseur réduites (18) sur sa longueur.

## Description

L'invention concerne un procédé d'assemblage d'un conduit sur un embout tubulaire rigide au moyen d'un écrou vissé sur l'embout, ainsi qu'un raccord pour la mise en oeuvre du procédé.

Dans un tel procédé d'assemblage où un écrou vient se visser sur un embout fileté pour effectuer le raccordement, il faut assurer une liaison mécanique entre l'écrou qui doit être libre en rotation et le conduit à raccorder sur l'embout. D'une manière générale, et pour assurer cette liaison mécanique, on prévoit une douille métallique qu'il faut sertir sur l'extrémité du conduit. Or, une opération de sertissage nécessite d'avoir recours à un outillage particulier dont l'achat est d'un investissement non négligeable.

Un but de l'invention est de pouvoir s'affranchir de l'utilisation d'un outillage de sertissage, sans pour autant compliquer la structure du raccord.

On connaît des documents DE-297 02 078 et EP-0 945 663, des procédés d'assemblage de type bicône où les deux extrémités d'une bague de verrouillage métallique se déforment sous l'action du vissage d'un écrou pour venir en prise avec le tuyau, et du document US-3,756,632 un procédé d'assemblage utilisant une bague de verrouillage souple qui se déforme sous l'action du vissage d'un écrou.

Un but de l'invention est de proposer des solutions différentes à ces modes de réalisation d'assemblage selon l'art antérieur en considérant le cas d'un tuyau souple ou semi-rigide, et le cas d'un tuyau rigide.

L'invention propose un procédé d'assemblage d'un conduit sur un embout tubulaire rigide au moyen d'un écrou vissé sur l'embout, ce procédé consistant à rapporter une bague métallique autour du conduit, et à utiliser l'opération de vissage de l'écrou sur l'embout pour provoquer une compression axiale de la bague et assurer une solidarisation mécanique irréversible entre la bague et le conduit, qui est caractérisé en ce qu'il consiste à réaliser un usinage de la bague pour favoriser le fluage de la matière vers l'intérieur de la bague, l'opération d'usinage de la bague consistant à ménager des zones d'épaisseur réduites sur sa longueur.

La mise en oeuvre d'un tel procédé ne nécessite donc aucun outillage de sertissage, mais une simple clé pour assurer l'opération de vissage et de dévissage de l'écrou.

L'invention concerne également un raccord pour la mise en oeuvre du procédé.

Les avantages qui en résultent sont bien évidemment de faire l'économie d'un outillage de sertissage, ce qui est loin d'être négligeable du point de vue économique.

Par ailleurs, la mise en oeuvre de ce procédé est simple et ne requiert aucune compétence particulière.

D'autres avantages, caractéristiques et détails de l'invention ressortiront du complément de description qui va suivre en référence à des dessins annexés, donnés uniquement à titre d'exemple et dans lesquels :
- les figures 1 à 3 sont des demi-vues en coupe axiale pour illustrer une première mise en oeuvre du procédé d'assemblage selon l'invention dans le cas d'un conduit souple ou semi-rigide, et
- les figures 4 à 6 sont des demi-vues en coupe axiale pour illustrer une seconde mise en oeuvre du procédé d'assemblage selon l'invention dans le cas d'un conduit rigide.

Le procédé d'assemblage selon l'invention pour raccorder un conduit 1 sur un embout tubulaire rigide 3 fait notamment intervenir une bague métallique 5 qui est rapportée librement autour du conduit 1, puis solidarisée de manière irréversible avec le conduit 1 au cours de l'opération de vissage d'un écrou 7 sur l'embout tubulaire 3.

D'une manière générale :
- le conduit 1 peut être soit souple ou semi-rigide, soit rigide,
- l'embout 3 présente un filetage 3a sur sa paroi interne,
- la bague 5 présente une diamètre interne supérieur au diamètre externe du conduit 1, et un diamètre externe inférieur au diamètre interne de l'écrou 7, et
- l'écrou 7 présente un taraudage complémentaire 7a sur sa paroi interne pour pouvoir se visser sur l'embout 3, et un épaulement annulaire radialement interne 10 à une extrémité pour coopérer avec une extrémité de la bague 5 au cours de l'opération de vissage.

Le procédé d'assemblage va être décrit ci-après en considérant successivement le cas d'un conduit souple ou semi-rigide, et le cas d'un conduit rigide.

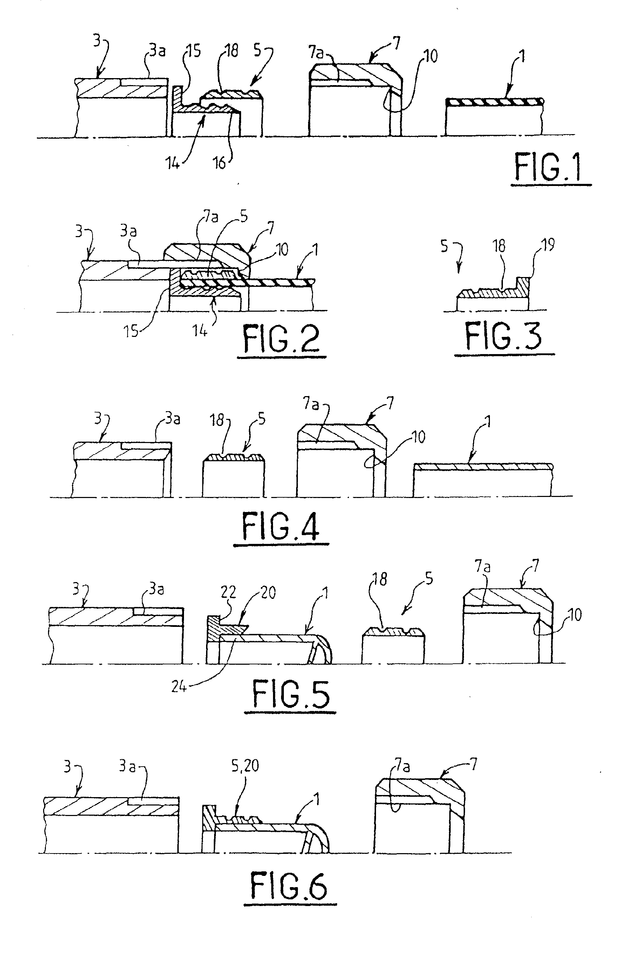

Selon une première mise en oeuvre du procédé d'assemblage selon l'invention, telle qu'illustrée sur les figures 1 à 3, on utilise une bague métallique 5 qui va se déformer au cours de l'opération de vissage de l'écrou 7 sur l'embout 3. Plus précisément, la bague 5 va subir une compression axiale avec fluage de matière en direction du conduit 1. Avantageusement, on réalise un usinage préalable de la bague 5 pour favoriser le fluage de la matière en ménageant des zones d'épaisseur réduite sur sa longueur, cet usinage consistant par exemple à prévoir des gorges annulaires 18 autour de la bague 5.

Dans cette première mise en oeuvre du procédé d'assemblage, la bague 5 est destinée à rester à l'intérieur de l'écrou 7, et ses deux extrémités viennent respectivement en appui sur la collerette 15 de l'insert 14 et sur l'épaulement annulaire interne 10 de l'écrou 7, comme cela est visible sur la figure 2 avant la fin de l'opération d'assemblage et déformation de la bague 5.

Les deux extrémités de la bague 5 peuvent être chanfreinées de manière à présenter deux faces d'extrémité tronconiques et, dans ce cas, l'épaulement annulaire interne 10 de l'écrou 7 est chanfreiné de manière à présenter une forme complémentaire (figures 2 et 3).

Selon une variante illustrée sur la figure 3, la bague 5 peut venir en appui sur l'épaulement annulaire interne 10 au moyen d'une collerette 19 prévue à une extrémité de la bague 5.

Selon cette première mise en oeuvre du procédé d'assemblage, le vissage de l'écrou 7 engage la bague 5 sur l'insert 14, et dès que la bague 5 vient en appui sur la collerette 15 de l'insert 14, la bague 5 va se déformer axialement avec fluage de la matière en direction du conduit 1, ce qui a pour effet d'assurer un accrochage mécanique irréversible entre la bague 5 et le conduit 1.

Une seconde mise en oeuvre du procédé d'assemblage selon l'invention, telle qu'illustrée sur les figures 4 à 6, s'applique avantageusement dans le cas d'un conduit 1 rigide, avec une bague métallique 5 qui subit également une compression axiale avec fluage de la matière.

Sur la figure 4, les deux extrémités de la bague 5 viennent respectivement en appui sur l'épaulement annulaire interne 10 de l'écrou 7 et sur la face d'extrémité de l'embout 3.

Sur la figure 5, on utilise un insert 20 dont une extrémité présente une collerette 22 destinée à venir en appui sur la face d'extrémité de l'embout 3, et le conduit 1 s'engage dans l'insert 20 jusqu'à venir en butée sur un épaulement annulaire interne 24 de l'insert 20. Les deux extrémités de la bague 5 viennent alors respectivement en appui sur l'extrémité de l'insert 20, qui est opposée à la collerette 22, et sur l'épaulement annulaire interne 10 de l'écrou 7.

En variante illustrée sur la figure 6, la bague 5 et l'insert ne forment qu'une seule pièce.

D'une manière générale, le procédé selon l'invention peut être mis en oeuvre quel que soit le diamètre des conduits 1. Cependant, ce procédé est notamment avantageux pour des conduits dont le diamètre interne se situe entre 12 et 30mm par exemple, ce qui est le cas dans de nombreuses applications. En effet, pour de tels diamètres, l'écrou 7 peut être facilement vissé avec une clé classique dont la manipulation ne pose pas de problème particulier pour un individu quelconque.

A titre d'exemple, la bague 5 peut s'étendre sur une longueur de l'ordre de 12mm et avec une épaisseur de l'ordre de 1 à 2mm. Dans les modes de réalisation où la bague 5 est déformable, on peut prévoir au moins deux gorges annulaires 18 pour assurer le fluage de la matière lorsque la bague 5 est mise en compression axiale, sachant que la profondeur de ces gorges 18 est de l'ordre de 30 à 95% de l'épaisseur de la bague 5, en particulier de l'ordre de 50 à 80% de cette épaisseur.

Par ailleurs, le profil en section droite des gorges 18 n'est pas nécessairement de forme semi-circulaire et/ou ne présente pas nécessairement une symétrie dans un plan transversal à la bague.

Quel que soit le mode de mise en oeuvre du procédé, il n'y a pas à prévoir de moyen d'étanchéité entre le conduit 1 et la bague 5 d'une part, et entre le conduit 1 et l'insert 14 d'autre part.

Enfin, l'embout 3 sur lequel vient se raccorder le conduit 1 peut lui-même être raccordé sur un second conduit, c'est-à-dire que le procédé et le raccord selon l'invention peuvent être utilisés pour raccorder deux conduits entre eux.

L'invention peut s'appliquer à de nombreux domaines, en particulier celui du bâtiment pour réaliser les raccordements des conduits d'eau des sanitaires, par exemple.

## Revendications

1. Procédé d'assemblage d'un conduit (1) sur un embout tubulaire rigide (3) au moyen d'un écrou (7) vissé sur l'embout (3), ce procédé consistant à rapporter une bague métallique (5) autour du conduit (1), et à utiliser l'opération de vissage de l'écrou (7) sur l'embout (3) pour provoquer une compression axiale de la bague (5) et assurer une solidarisation mécanique irréversible entre la bague (5) et le conduit (1), **caractérisé en ce qu'**il consiste à réaliser un usinage de la bague (5) pour favoriser le fluage de la matière vers l'intérieur de la bague, l'opération d'usinage de la bague (5) consistant à ménager des zones d'épaisseur réduites (18) sur sa longueur.

2. Procédé d'assemblage selon la revendication 1, **caractérisé en ce qu'**il consiste à réaliser l'usinage sous la forme de gorges annulaires (18) autour de la bague (5).

3. Procédé d'assemblage selon la revendication 1 ou 2, **caractérisé en ce qu'**il consiste à venir mettre respectivement en appui les deux extrémités de la bague (5) sur l'embout (3) et sur un épaulement annulaire interne (10) de l'écrou (7), pour provoquer la déformation de la bague (5) au cours de l'opération de vissage.

4. Procédé d'assemblage selon l'une des revendications 1 à 3, **caractérisé en ce qu'**il consiste à engager un insert (14) à queue de sapin à l'intérieur du conduit (1) qui est souple ou semi-rigide, à mettre l'insert (14) en appui sur l'embout (3), et à utiliser la déformation de la bague (5) pour forcer le conduit (1) à épouser sensiblement la forme en queue de sapin de l'insert (14).

5. Procédé d'assemblage selon l'une quelconque des revendications 1 à 3, **caractérisé en ce qu'**il consiste à interposer un insert tubulaire rigide (20) entre l'embout (3) et la bague (5), de manière à ce qu'une face de l'insert (20) vienne en appui sur l'embout (3) d'une part, et que le conduit (1), qui est rigide, et la bague (5) viennent en appui sur l'autre face de l'insert (20) d'autre part.

6. Procédé d'assemblage selon la revendication 5, **caractérisé en ce que** l'insert (20) et la bague (5) ne forment qu'une seule pièce.

7. Raccord pour assembler un conduit (1) sur un embout tubulaire rigide (3) au moyen d'un écrou (7) vissé sur l'embout (3), **caractérisé en ce qu'**il comprend au moins une bague métallique (5) qui est rapportée sur le conduit (1) et solidarisée au conduit (1) selon un procédé d'assemblage tel que défini selon l'une quelconque des revendications 1 à 6, **caractérisé en ce que** la bague (5) présente des zones d'épaisseur réduite sur sa longueur.
